# EUROPÄISCHE PATENTSCHRIFT

(11) **EP 2 169 882 B1**
(45) Veröffentlichungstag und Bekanntmachung des Hinweises auf die Patenterteilung: **19.10.2011**
(21) Anmeldenummer: 09011804.3
(22) Anmeldetag: 16.09.2009
(51) Int. Cl.: H04L 12/40

(54) **Schiffsruder-Steuerung mit einem CAN-Bus**
Ship rudder control with a CAN bus
Commande de gouvernail de bateau dotée d'un bus CAN

(30) Priorität: 26.09.2008 DE 102008049126
(43) Veröffentlichungstag der Anmeldung: 31.03.2010
(73) Patentinhaber: Raytheon Anschütz GmbH, 24106 Kiel (DE)
(72) Erfinder: Rosen, Wolfgang, 24127 Schönberg (DE); Pedersen, Norbert, 24159 Kiel (DE); Wessel, Michael, 24145 Kiel (DE)
(74) Vertreter: Biehl, Christian

(56) Entgegenhaltungen:
- EP-A- 1 631 014
- WO-A-2006/136997
- WO-A-2007/135630

## Beschreibung

Die Erfindung betrifft eine Schiffsrudersteuerung, einen sog. Autopilot, mit einer Mehrzahl von Elektronikkomponenten, die mit einem CAN-Bus miteinander verbunden sind. Aufgrund der enormen Bedeutung, die die korrekte Ruderlage und auch deren Anzeige an einen Schiffsführer besitzt, sind auf Schiffen alle Sensoren, Stellgeber und Anzeigegeräte mehrfach vorhanden.

Bei der Verwendung von Elektronikkomponenten mit einem CAN-Bus, wie sie im Kraftfahrzeugbau üblich ist, ergibt sich das Problem, dass Ausfälle einzelner Komponenten häufig auf die mangelnde Funktionsfähigkeit eines Businterface bzw. auf die Verkabelung oder Steckverbindung des Elektronikbauteils an dem Bus zurückzuführen sind. Solche Störungsfälle sollen nach Möglichkeit in ihren Auswirkungen minimiert werden.

Weiter kann der Bus in seiner Eigenschaft als Datenleitung beschädigt sein, wobei diese Beschädigung auch schon das Auffangen eines Störsignals sein kann, also nur temporär vorliegen kann. Um zu vermeiden, dass dennoch ein solcher Bus insgesamt ausfällt, ist daher eine Redundanz durch einen Ausweichweg vorzusehen.

Die Verwendung von zwei Datenbussen gleichzeitig ist jedoch mit einem ganz erheblichen Overhead an Informationsübertragung verbunden, die insbesondere wieder die Busschnittstellen belastet.

Als Stand der Technik ist die WO 2006/136997A1 "Communication Network System" zu nennen, in der bereits ein fehlertolerantes Kommunikationssystem beschrieben wird, dessen Funktionsweise jedoch auf Blockiermitteln beruht, die als Antwort auf das Erfassen eines Verbindungsfehlers in einer kritischen Verbindung aktiviert werden, um einen weiteren Übertragungspfad zu eröffnen.

Weiter ist die WO 2007/135630 "Gateway for a data bus system" zu nennen, in der in jeder Kanalschnittstelle ein Protokollkern verankert ist und eine Steuerung mit diagnostischer Kopiefunktion vorgesehen ist, die alle Mitteilungen durch ein Mitteilungsfilter schickt, um gefilterte Mitteilungen an eine Zielschnittstelle zu senden. Busleitungen selbst werden nicht anders genutzt, wenn nach dem Vorschlag dieses Systems vorgegangen wird.

Der Erfindung liegt daher die Aufgabe zugrunde, eine Redundanz für den Fall von Fehlfunktionen zu schaffen, jedoch dies ohne unnötiges Aufblähen und Verkomplizieren der Datenübertragung. Nur temporär gestörte Bauteile sollen für den Fall, dass sie funktionieren weiter/erneut betrieben werden.

Erfindungsgemäß wird dies durch eine Schiffsruder-Steuerung mit den Merkmalen des Anspruches gelöst. Vorteilhaft ist, dass ein zweiter CAN-Bus im wesentlichen identisch zu dem ersten vorgesehen wird und jede Elektronikkomponente mit zwei Businterfaces versehen wird, so dass die Nutzung entweder des einen oder des anderen Busses möglich ist.

Die Entscheidung, welcher Bus genutzt wird, muss nun geeignet getroffen werden. Hierzu liegen im Stand der Technik keine Anregungen vor, da das CAN-Bussystem darauf konzipiert ist, ohne Master und Slave mit einer Vielzahl von völlig gleichberechtigten Komponenten zu arbeiten. Die Erfindung schlägt nun jedoch vor, auf beiden Buskanälen lediglich telegrammartig (also ohne große Datenmengen, kurz) Signale zwischen den einzelnen Komponenten auszutauschen, wobei in diesen Telegrammen wenigstens Adressierungen jedes Elektronikbauteils vorhanden sind, die eindeutig das Bauteil identifizieren und die auch nicht doppelt vergeben sind.

Ein weiteres Businterface an jeder Komponente des Steuerungssystems, das mit einem separaten, zweiten Bus gekoppelt ist, wird dazu genutzt ebenfalls - wie auf dem ersten Bus - sog. Heartbeat-Telegramme auszusenden, wobei die Telegramme jeweiliger Komponenten mit eindeutigen Adressen versehen sind, und weiter Information den Komponenten zuzuweisen und in die Telegramme einzufügen, die sie als überwachungsfähig oder als nicht-überwachungsfähig kennzeichnen.

Weiter weist eine Komponente eine Einrichtung zum Aussenden von Heartbeat-Telegrammen an alle (anderen) Komponenten auf, die neben der Adresse der Komponente auch die Überwachungsfähigkeit oder die Nicht-Überwachungsfähigigkeit übermitteln und die weiter zum Empfang von Signalen von anderen Komponenten auf beiden CAN-Bussen und zur Abgabe ihrer Steuerungsinformationen auf dem einen oder dem anderen CAN-Bus eingerichtet sind, erste Vergleichsmittel an allen überwachungsfähigen Komponenten, die anhand der Adressen anderer Komponenten in den empfangenen Heartbeat-Telegrammen durch Vergleich die eigene Eigenschaft als Überwachungskomponente starten oder abschalten, und zweite Vergleichsmittel an allen überwachungsfähigen Komponenten, die anhand der Anzahl empfangener Heartbeat-Telegramme durch Vergleich mit der Anzahl der auf dem anderen Kanal empfangenen Heartbeat-Telegramme, einen Wechsel des Kanals auf den mit der höheren Zahl an empfangenen Telegrammen veranlassen, wobei ein Kanalwechselbefehl nur dann zur Versendung kommt, wenn sich die Komponente zuvor als aktive Überwachungskomponente unter Aktivierung der zweiten Vergleichsmittel durch Tätigkeit der ersten Vergleichsmittel bestimmt hat.

Durch einfaches Vergleichen der Adresssignale kann nun eine Komponente die Entscheidung fällen, welcher der beiden Busse zu benutzen ist. Zum Beispiel kann diejenige Komponente mit der niedrigsten Adresse (z. B. der niedrigste Bitwert) als Überwachsungskomponente ausgewählt werden. Damit wird die Entscheidung, welcher Kanal von den beiden oder mehr zur Verfügung stehenden CAN-Bussen zu wählen ist, auf eine Komponente delegiert, um zu vermeiden, dass widersprechende Informationen gesendet werden. Wie diese Komponente mit den anderen Komponenten kommuniziert, wird im folgenden näher erläutert.

Es wird darauf hingewiesen, dass nicht jede Komponente des CAN-Bus Systems als Überwachungskomponente auswählbar sein muss. Ein einfacher Sensor, der seine Daten zwar auf den CAN-Bus bringt, aber keine weitere Logik enthält, kann als "nicht-überwachungstauglich" in seinem Adresstelegramm gekennzeichnet werden. Diejenigen Elektronikbaueinheiten, die jedoch solche Überwachung durchführen können, besitzen hierzu eine Vergleichsschaltung, die es ihnen ermöglicht, Adressen zu vergleichen und zu entscheiden, ob die eigene Adresse höher oder niedriger als die aller empfangenen Telegramme ist. Die genau eine Elektronikbaueinheit, die bei diesen Vergleichen sich als niedrigste adressierte Einheit erkennt, sendet nun ein geändertes Telegramm aus, wonach sie die Funktion als Überwachungskomponente übernimmt und entscheidet, welcher Bus zu verwenden ist.

Da es Fälle geben kann, in denen die Überwachungskomponente neu in ein bereits laufendes System hinzugefügt wird, kann es Fälle geben, in denen eine andere Komponente, die vorher als Überwachungskomponente diente, nun ihre Tätigkeit einstellt und ggf. auf den Kanal wechselt, der von der neuen Überwachungskomponente vorgegeben wird.

Andererseits kann es sein, dass die Überwachungskomponente, auch wenn sie beispielsweise auf Kanal 1 eingestellt ist und alle anderen Komponenten auf Kanal 2 bereits miteinander kommunizieren, erkennt, dass Kanal 2 vom bisher laufenden System verwendet wird, und dass sie sich daher selbst auf Kanal 2 einstellen wird.

Es wird darauf hingewiesen, dass lediglich sogenannte Heartbeat-Telegramme mit den Telegrammadressen auf beiden Kanälen ausgetauscht werden, während die tatsächlichen Funktionswerte der Schiffsruder-Steuerung auf lediglich einem Kanal ausgetauscht werden. In einer derartigen Schiffsruder-Steuerung kann die Zahl der Komponenten, die an dem Bussystem hängen, ohne weiteres dreistellig sein.

Weitere Merkmale der Erfindung ergeben sich aus nachfolgender Beschreibung eines bevorzugten Ausführungsbeispiels.

Dabei wird insbesondere der Ablauf illustriert, wenn eine Komponente das System verlässt, also keine korrekten Daten mehr sendet, ein Businterface fehlerhaft wird bzw. das Kabel zu dem Interface nicht mehr voll funktionsfähig ist oder eine neue Komponente hinzugefügt wird, die z.B. nicht dazu geeignet ist, als Überwachungskomponente ausgewählt zu werden.

In den Figuren zeigt :
- Fig. 1: eine Darstellung des Ablaufs, der beim Anschalten wirksam wird, und
- Fig. 2: ein Ablaufdiagramm, wie von der Überwachungskomponente ausgehend mehr Datentelegramme erreicht werden, mehr Heartbeat-Telegramme erreicht werden und wie bei einem Fall eines Teilnehmers mit umgekehrter Primär- Sekundärkennung vorgegangen wird.

Das Bussystem, das die Redundanz der Datenübertragung innerhalb eines Schiffsruder-Steuerungssystems über einen CAN-Bus sicherstellen soll, wird als über jeweils zwei gleiche Businterface verfügen. Je nach Systemzustand übernimmt ein Teilnehmer die Überwachungsfunktion, d. h. die Überwachungsfunktion ist nicht an einen Teilnehmer fest gekoppelt. Die beiden Bus-Kanäle haben auf jedem angeschlossenen Knoten eine feste Bezeichnung: die sog. Kanal-Nummer **Kanal 1, Kanal 2.**

Diese Kanalnummern werden in der Software zugewiesen (oder per Konfiguration in einem Service Mode (auf keinen Fall im User-Mode), wobei eine Hardwareschnittstelle die Bezeichnung Kanal A erhält und die andere Kanal B ist. Die Wahl, welche zwei Hardwareschnittstellen zusammengeschaltet werden, ist frei. Es ist möglich mehrere Instanzen des Advanced Redundancy Dual Bus innerhalb einer Software zu erstellen. Beide Kanäle haben einen definierten Kanal Status: **Primary Channel** oder **Secondary Cannel.** Diese beiden Statusinformationen werden in dem Heartbeat Telegramm mit übertragen, d.h. die beiden Heartbeat Telegramme, die jeweils auf dem Primary Channel und auf dem Secondary Channel übertragen werden, haben also unterschiedlichen Inhalt!

Damit werden auf dem Primary Channel immer alle Daten übertragen. Auf dem Secondary Channel werden nur die Heartbeat Telegramme übertragen bzw. die Telegramme, die für die Verwaltung der Redundanz noch notwendig sind.

Heartbeat Telegramme werden auf beiden Kanälen übertragen, jeweils mit unterschiedlichen Merkmalen, z.B. ob es sich hier um den Primary Channel oder um den Secondary Channel handelt. Die Initialisierung der beiden Kanäle ist gleich. Die Teilnehmer des Advanced Redundancy Dual Bus werden unterschieden in **aktive Überwachungskomponenten** und **passive Überwachungskomponenten** sowie **nicht-überwachungsfähige Komponenten.** Dieses wird im Heartbeat Telegramm gekennzeichnet.

Aktiver Überwachungs-Teilnehmer ist z. B. derjenige mit der niedrigsten Adresse aus den - Überwachungs-Teilnehmern. Er überwacht den Bus und veranlasst das Umschalten, im Folgenden als **AUET** bezeichnet. Passiver Überwachungs- (überwachungsfähiger-) Teilnehmer ist dann derjenige, dessen Adresse höher ist als die des aktiven AUET. Er überwacht auch den Bus, kann aber nicht das Umschalten veranlassen, aber jeder Zeit die aktive Überwachungsfunktion übernehmen, sollte diese ausfallen. Er wird im Folgenden als **PUET** bezeichnet. Passive, nicht-überwachungsfähige Teilnehmer, die nicht die Überwachungsfunktion einnehmen bzw. übernehmen können, sind meist vorhanden, aber nicht notwendig. Beim Bootvorgang werden alle Teilnehmer auf ihrem primary und secondary Channel Heartbeats mit ihrer Kennung senden. Dabei kann z.B. beim Anschalten Kanal A der primary Channel sein und Kanal B der secondary Channel.

Jeder Teilnehmer vergleicht die empfangenen Heartbeats mit seiner Adresse. Ist die empfangene Adresse niedriger, so wechseln die entsprechenden Teilnehmer ihre Kennung und werden zum passiven Teilnehmer PUET. Auf diese Weise bleibt ein AUET übrig. Dieser Vorgang dauert ca. 5 Heartbeatintervalle.

Während dieser Zeit werden schon Daten von den Teilnehmern gesendet. Jeder Teilnehmer stellt die Datenmenge auf jedem Kanal fest. Der übrig gebliebene aktive Überwachungs AUET entscheidet jetzt, welcher Kanal der primäre ist. Die Kriterien dafür sind:
1. Menge der Daten
   Bei Heartbeat-Differenz gleich 0 wird der Kanal mit der höchsten Datenmenge zum Primary-Channel, weil es Sinn macht, möglichst wenig Daten zu schalten.
2. Differenz der Heartbeats.
   Sind auf Kanal A mehr Daten und ist die Heartbeat-Differenz 0, so ist der Kanal A der primary Channel.
   Sind auf Kanal B mehr Daten und ist die Heartbeat-Differenz 0, so wird Kanal B zum primary Channel.
   Sind auf Kanal A mehr Daten, aber weniger Heartbearts, so wird der Kanal B zum primary Channel.
   Sind auf Kanal B mehr Daten, aber weniger Heartbeats, so wird der Kanal A zum primary Channel.
   Sind auf Kanal A mehr Daten und mehr Heartbeats, so bleibt dieser der primary Channel.
   Sind auf beiden Kanälen die Datenmengen gleich, und die Heartbeat-Differenz 0, so bleibt der Kanal A der primary Channel.

Zuschalten eines Teilnehmers mit niedrigerer Adresse als der vorhandene AUET:
Der neue AUET erkennt, dass er der neue AUET werden wird und teilt seinen AUET-Status auf dem Bus mit. Daraufhin wechselt der bisherige AUET in den PUET Status.

Zuschalten sonstiger Teilnehmer also nicht-überwachungsfähiger Einheiten, Slave-Einheiten (oder passiver Überwachungseinheiten), d. h. Adresse höher als die des vorhandene AUET:
Der neue Überwachungsfähige Teilnehmer überprüft den Bus auf einen vorhandenen AUET und nimmt PUET Status an.
Der AUET überprüft die Heartbeats dieses neu zugeschalteten Teilnehmers und veranlasst das korrekte Aufschalten auf den Bus dieses Gerätes.

Die Überwachung der Busse wird also erfindungsgemäß mittels kurzer (sog. Heartbeat-) Telegramme vorgenommen.

Jeder Teilnehmer sendet dabei zyklisch (z.B. jede Sekunde) einen Heartbeat auf den beiden Kanälen, dem primary und secondary Channel. Der Teilnehmer mit der niedrigsten Adresse hat nach dem Bootvorgang die aktive Überwachungs-Funktion und ist AUET.

Die Anzahl der Heartbeats auf jeden Bus wird von jedem Teilnehmer überwacht. Aber nur der AUET agiert. Fehlen auf dem primären Kanal Heartbeats, wird ein Fehler-Counter hochgezählt. Der AUET überprüft, ob der Fehler-Counter in einer bestimmten Zeit kontinuierlich erhöht wird. Ist dieses der Fall, wird mittels eines Control-Telegramms auf den anderen Kanal umgeschaltet. Der Datenverkehr findet jetzt auf diesem Kanal statt und ist jetzt neuer Primary Kanal. Die Zeit vom Auftreten des Fehlerfalles bis zum Umschalten beträgt 3 - 5 Heartbeatintervalle. Während dieser Zeit tritt ein Datenverlust auf. Bei einem komplett gestörtem Bus gilt diese für alle Teilnehmer. Sind nur ein paar Teilnehmer gestört, tritt nur bei denen ein Datenverlust auf.

Zusammengefasst heißt das, dass nach einer erfolgten Umschaltung der Kanäle aufgrund eines Fehlerfalles in einem Kanal, oder auch einer von außen erzwungenen Umschaltung (z.B. durch Service Eingriff / Integrationsprüfung / ...), folgendes ausgelöst wird:
■ Aus dem Primary Channel wird der Secondary Channel.
■ Aus dem bisher Secondary Channel wird der Primary Channel.
■ Der Datenverkehr findet jetzt auf dem ,neuen' Primary Channel statt.
■ Auf dem ,neuen Secondary Channel werden nur Heartbeats gesendet.

Rückgeschaltet wird nur, wenn sich eine neue Heartbeat Differenz ergibt. Die physikalische Zuordnungen Kanal A und Kanal B bleiben bestehen und ändern sich demgemäß nie!

Der Vergleich der Adressen und AUET-Status wird von jedem Teilnehmer auch nach dem Booten vorgenommen. Dadurch kann bei Ausfall eines AUET ein neuer AUET die Advanced Redundancy Dual Bus Umschaltung kontrollieren. Denn fällt der AUET aus, so werden alle PUET kurzzeitig zu AUET, bis der AUET mit der niedrigsten Adresse gefunden ist. Die anderen Teilnehmer schalten dann wieder in den Zustand PUET.

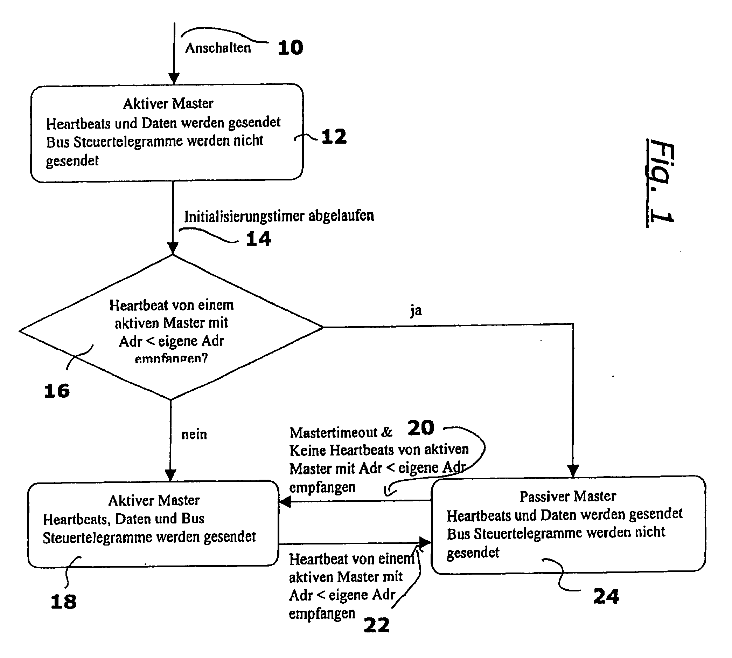

In der Fig. 1 wird nach einem Anschaltvorgang, der durch das Bezugszeichen 10 gekennzeichnet ist, der aktive AUET (Bezugszeichen 12) Heartbeats und Daten senden und zunächst keine Bussteuertelegramme senden. Nachdem dann bei Bezugszeichen 14 ein Initialisierungstimer abgelaufen ist, wird die Entscheidung getroffen (Bezugszeichen 16), ob der Heartbeat von einem AUET mit einer Adresse empfangen wird, die kleiner als die eigene Adresse ist.

Wenn dies der Fall ist, werden die ersten Vergleichsmittel zum PUET 24 (Pfeil Ja) geleitet, woraufhin weiter Heartbeats und Daten gesendet werden, aber nach wie vor keine Bussteuertelegramme gesendet werden. Wenn jedoch die Entscheidung "Nein" lautet, wird der AUET im Feld 18 neben den Heartbeats und Daten auch Bussteuertelegramme senden. Unter Bezugszeichen 20 ist gezeigt, wie ein AUET time out erfolgt, wenn keine Heartbeats vom AU-ET mit einer Adresse kleiner als der eigenen Adresse empfangen werden. Bezugszeichen 22 zeigt, dass die Heartbeats von einem AUET mit einer Adresse kleiner als der eigenen Adresse empfangen werden, so dass eine Umschaltung zwischen aktivem und passivem AUET und PUET solange unterdrückt ist.

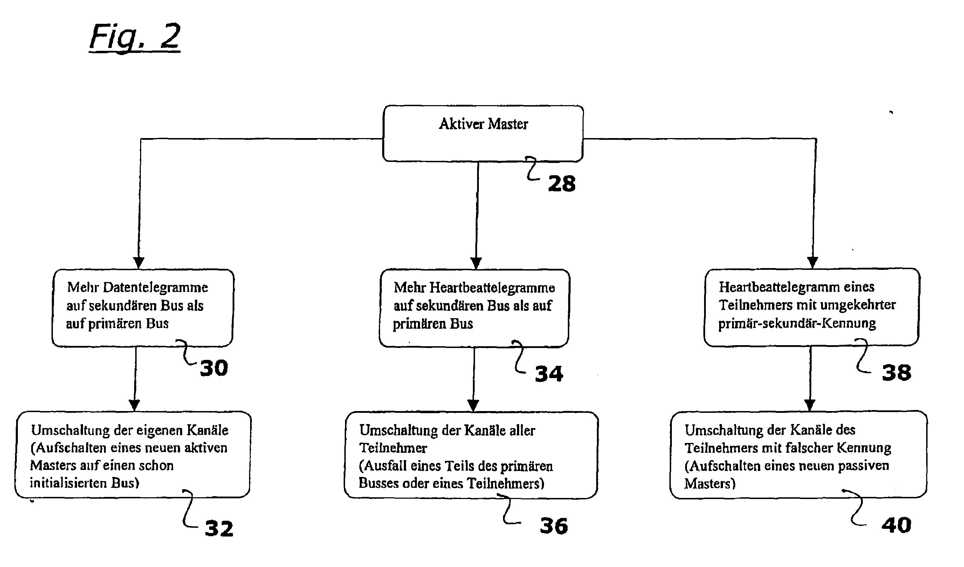

In der Fig. 2 wird ein AUET 28 drei verschiedene Vorgänge ausführen können. Wenn im Feld 30 mehr Datentelegramme auf dem sekundären Bus als auf dem primären Bus erkannt werden, erfolgt im Feld 32 die Umschaltung der eigenen Kanäle (Aufschalten eines neuen aktiven AUET auf einen schon initialisierten Bus). Im mittleren Strang können mehr Heartbeat-Telegramme auf dem sekundären Bus als auf dem primären Bus empfangen werden. Danach erfolgt ein Umschalten der Kanäle aller Teilnehmer (es wird der Ausfall des Teils des primären Busses oder eines Teilnehmers angenommen). Schließlich können im rechten Zweig auch Heartbeat-Telegramme eines Teilnehmers mit umgekehrter Primär-Sekundärkennung auftauchen. Dann erfolgt eine Umschaltung der Kanäle dieses Teilnehmers mit falscher Kennung (dies ist der Fall eines Aufschaltens eines neuen passiven Elementes). Diese Umschaltung wird bewirkt, indem die Überwachungskomponente ein entsprechendes Steuertelegramm an die passive Komponente sendet.

## Patentansprüche

1. Schiffsruder-Steuerung mit einer Mehrzahl von Komponenten, die mit einem Bus-Interface an einen CAN-Bus und über diesen auch miteinander verbunden sind, beschrieben durch
- ein weiteres Businterface an jeder Komponente des Steuerungssystems, das mit einem separaten, zweiten Bus gekoppelt ist, wobei die Komponenten mit eindeutigen Adressen versehen sind und weiter Information den Komponenten zugewiesen ist, die sie als überwachungsfähig oder als nicht-überwachungsfähig kennzeichnen,
- jeweils eine Einrichtung zum Aussenden von Telegrammen an allen Komponenten, die neben der Adresse der Komponente auch die Überwachungsfähigkeit oder die Nicht-Überwachungsfähigigkeit übermitteln und die zum Empfang von Signalen von anderen Komponenten auf beiden CAN-Bussen und zur Abgabe ihrer Steuerungsinformationen auf dem einen oder dem ändern CAN-Bus eingerichtet sind, und
- erste Vergleichsmittel an allen überwachungsfähigen Komponenten, die anhand der Adressen anderer Komponenten in den empfangenen Telegrammen durch Vergleich die eigene Eigenschaft als Überwachungskomponente starten oder abschalten,
- zweite Vergleichsmittel an allen überwachungsfähigen Komponenten, die anhand der Anzahl empfangener Telegramme durch Vergleich mit der Anzahl der auf dem anderen Kanal empfangenen Telegramme einen Wechsel des Kanals auf den mit der höheren Zahl an empfangenen Telegrammen veranlassen,
- wobei ein Kanalwechselbefehl nur dann zur Versendung kommt, wenn sich die Komponente zuvor als aktive Überwachungskomponente unter Aktivierung der zweiten Vergleichsmittel durch Tätigkeit der ersten Vergleichsmittel bestimmt hat.

2. Schiffsruder-Steuerung nach Anspruch 1, **dadurch gekennzeichnet, dass** der zweite Bus ein identischer CAN-Bus ist.

3. Schiffsruder-Steuerung nach Anspruch 1 oder 2, **dadurch gekennzeichnet, dass** alle Komponenten überwachungsfähig sind.

4. Schiffsruder-Steuerung nach Anspruch 1 oder 2, **dadurch gekennzeichnet, dass** nur zwei Komponenten überwachungsfähig sind.

5. Schiffsruder-Steuerung nach einem der vorangehenden Ansprüche, **dadurch gekennzeichnet, dass** die Buskontroll- und Bus(auf)schalt-Telegramme stets auf beiden Kanälen ausgesandt werden.

6. Schiffsruder-Steuerung nach einem der vorangehenden Ansprüche, **dadurch gekennzeichnet, dass** Steuertelegramme für das Schiffsruder nur auf dem von der aktiven Überwachungskomponente als primary Kanal erkannten und per Telegramm mitgeteilten Kanal gesendet werden.

## Claims

1. A ship rudder control having a plurality of components that are connected, using a bus interface, to a CAN bus and via this also with each other, described by
- a further bus interface at each component of the control system, that is coupled to a separate, second bus, the components being provided with unambiguous addresses and furthermore information being assigned to the components that characterize them as being monitorable or not being monitorable,
- in each case a device for transmitting telegrams to all components, that convey, in addition to the address of the component, also the monitorability or the non-monitorability and that are designed for receiving signals from other components on both CAN busses and for emitting their control information on the one or the other CAN bus, and
- first comparison means at all monitorable components that start or switch off their own property as monitoring component using the addresses of other components in the received telegrams by comparison,
- second comparison means at all monitorable components that cause, using the number of received telegrams by comparing with the number of telegrams received on the other channel, a change of channel to that having the higher number of received telegrams,
- a channel change command being only transmitted when the component has previously determined itself as active monitoring component by activating the second comparison means by activity of the first comparison means.

2. The ship rudder control according to Claim l, **characterized in that** the second bus is an identical CAN bus.

3. The ship rudder control according to Claim 1 or 2, **characterized in that** all components are monitorable.

4. The ship rudder control according to Claim 1 or 2, **characterized in that** only two components are monitorable.

5. The ship rudder control according to one of the preceding claims, **characterized in that** the bus checking and bus connecting/switching-on telegrams are always transmitted on both channels.

6. The ship rudder control according to one of the preceding claims, **characterized in that** control telegrams for the ship rudder are only transmitted on the channel recognized as primary channel by the active monitoring component and reported by telegram.

## Revendications

1. Commande de gouvernail de bateau constituée d'une multitude de composants qui sont connectés par une interface avec un bus CAN et à travers celui-ci aussi entre eux, décrit par
- une autre interface de bus sur chaque composant du système de commande, connectée à un deuxième bus séparé, les composants étant pourvus d'adresses uniques et attribués d'une information qui les identifie comme étant surveillables ou non-surveillables,
- un dispositif pour l'envoi de messages à tous les composants, transmettant en plus de l'adresse du composant aussi la capacité ou l'incapacité d'être surveillé et qui sont conçus pour recevoir des signaux d'autres composants sur les deux bus CAN et de communiquer leurs informations de commande sur l'un ou l'autre bus CAN, et
- des moyens primaires de comparaison dans tous les composants surveillables qui, à l'aide des adresses des autres composants dans les messages reçus et une comparaison, lancent ou arrêtent leur propre qualité de composant de surveillance,
- des moyens secondaires de comparaison dans tous les composants surveillables qui, à partir du nombre de messages reçus et une comparaison avec le nombre de messages reçus sur l'autre canal, ordonnent un changement du canal sur celui avec le plus grand nombre de messages reçus,
- un ordre de changement de canal n'étant émis que si le composant s'est identifié en tant que composant de surveillance actif en activant les moyens secondaires de comparaison par l'activité des moyens de comparaison primaires.

2. Commande de gouvernail de bateau selon la revendication 1, **caractérisée par le fait que** le deuxième bus est un bus CAN identique.

3. Commande de gouvernail de bateau selon la revendication 1 ou 2, **caractérisée par le fait que** tous les composants sont surveillables.

4. Commande de gouvernail de bateau selon la revendication 1 ou 2, **caractérisée par le fait que** seulement deux composants sont surveillables.

5. Commande de gouvernail de bateau selon une des revendications ci-dessus, **caractérisée par le fait que** les messages de contrôle de bus et d'allumage sont toujours émis sur les deux canaux.

6. Commande de gouvernail de bateau selon une des revendications ci-dessus, **caractérisée par le fait que** les messages de commande pour le gouvernail ne sont envoyés que sur le canal qui a été défini par le composant de surveillance actif en tant que canal primaire et qui a été communiqué par message.
